# EUROPEAN PATENT APPLICATION

(11) **EP 4 530 763 A1**
(43) Date of publication of application: **02.04.2025**
(21) Application number: 23200543.9
(22) Date of filing: 28.09.2023
(51) Int. Cl.: G05B 17/02, G05B 19/418

(54) **METHOD FOR SELECTING DESIGN PARAMETERS OF A TRANSPORT SYSTEM**

(71) Applicant: Siemens Aktiengesellschaft, 80333 München (DE)
(72) Inventor: BISSCHOF, Martin, 85653 Aying, Großhelfendorf (DE); SAMPER ESCUDERO, José Luis, 155 00 Prague (CZ); KÖRWER, Niklas, 51065 Köln (DE); CRAMER, Christian, 90559 Burgthann (DE); DAUM, Sebastian, 91052 Erlangen (DE)
(74) Representative: Siemens Patent Attorneys

(57) **Abstract**

A method for selecting a plurality of technical design parameters (P1, P2, P3) for a transport system (1) is provided, the transport system (1) comprising at least one linear and/or planar motor (10) with a stator (20) and at least one mover (30),
wherein the method comprises the following steps:
k) providing a plurality of design variants (Dᵢ) for the transport system (1), wherein each design variant (Dᵢ) is specified by a set of values for the plurality of technical design parameters (P1, P2, P3),
l) providing a model (M) of the transport system (1), for which the plurality of technical design parameters (P1, P2, P3) serve as input parameters,
m) performing simulations for a plurality of design variants (Dᵢ) as specified by the respective set of values for the plurality of technical design parameters (P1, P2, P3) based on the model (M), whereby at least two objective performance values (V1, V2) are obtained for the corresponding design variant (Dᵢ),
n) presenting a set of simulated design variants (Dᵢ) in a graphical representation (G), in such a way that at least a sub-set of the simulated objective performance values (V1, V2) is illustrated for the corresponding design variant (Dᵢ),
o) selecting at least one design variant (Dₛ) for a realization of the transport system (1) based on the graphical representation (G).

Furthermore, a computer program product for carrying out the method is provided.

## Description

The present invention relates to a method for selecting a plurality of technical design parameters for a transport system, the transport system comprising at least one linear and/or planar motor with a stator and at least one mover. The invention further relates to a computer program product for carrying out the method.

Industrial manufacturing lines often use automated transport systems for transporting work pieces and other materials within the manufacturing process. Such transport systems are often based on classical conveyor belts, driven by rotating machines. Recently, alternative drive concepts with linear or planar motors have increasingly been used in such transport systems, for example the transport systems marketed under the term Multi-Carrier-System (MCS). Here the transported elements are being transported by carriers, where the individual carriers are part of the respective linear or planar motor. There can in particular be more than one such motor in the transport system. A transport system of this type allows a very precise control of the movement of each carrier, in particular allowing the movement of neighboring carriers with strongly differing speed. When the carriers correspond to the movers of a linear or planar motor, a much higher throughput of transported elements and also a higher positioning accuracy can often be achieved compared to conventional conveyor belts.

In one possible configuration of such a transport system, an array of electromagnetic windings is integrated in the rail or plate which forms the stator of the motor. Correspondingly, the individual movers are equipped with permanent magnets which interact with the varying electromagnetic fields that are formed when the stator windings are energized with variable AC or DC currents. However, other configurations of such linear or planar motors are also feasible.

Transportation systems based on linear and/or planar motors have the advantage that they can be built from individual modules (e.g. movers, stator segments and/or other modular components), which are available in different types. Therefore, such a transportation system can easily be configured according to the requirements of a specific production task and/or the boundary conditions for a specific part of an overall production line. This makes the use of such transport systems very favorable in industrial manufacturing sites. The available modules from which such a transport system is built can be viewed as a highly flexible tool kit. The design parameters to be chosen by a planner can for example include the motor size, number and dimensions of stator segments and/or number and dimensions of individual movers, but also electromagnetic properties of the motor components, such as specifications of the magnet(s) and/or winding(s). These design parameters often have a high impact on achievable material throughput, energy consumption during operation, investment cost, operational flexibility and/or reliability of the overall manufacturing line. Therefore, the planner has the task to select a design solution which achieves a favorable compromise between various application-specific and customer-specific performance targets.

Currently applied design methods include the use of virtual commissioning techniques and the simulation of performance and technical feasibility parameters on a digital twin of the proposed configuration for the transport system. The planner usually iteratively evaluates the simulated performance of several design variants where the technical parameters are based on his previous experience and then selects one design variant based on the simulated performance values. This approach has several disadvantages and challenges: The selection of the final design variant for implementation in a real transport system is somewhat arbitrary, because the choice of candidate design variants to be tested in the simulation depends on the experience and the gut feeling of the planner. As the design variants to be considered are often chosen manually and iteratively during the design process, two planners might consider rather different candidate design variants. The iterative search for a favorable design variant within the multi-dimensional parameter space can also be very time consuming, especially if a manual selection of the next candidate design variant is needed for every step and the simulations are carried out sequentially. Furthermore, the selection of a favorable configuration can prove difficult, even when simulated performance values are available, because the selection generally involves a trade-off between conflicting targets (such as high material throughput versus low energy consumption). When the assessment of such conflicting targets is done differently by different planners, the final choice of the design parameters becomes even more arbitrary. In other words, the process of parameter selection is not deterministic and also usually not transparent to other members of an overall planning team or to a potential customer.

It is therefore a goal of the present invention to provide an enhanced method for selecting design parameters of a transport system. In particular, a selection method shall be provided by which a more reproducible and/or more transparent parameter selection can be achieved. The selection of a suitable design variant with respect to conflicting performance targets shall also be made easier for the planner.

These objects of the invention are achieved by claim 1 with respect to the selection method and by claim 14 with respect to a corresponding computer program product. The method according to the invention is a method for selecting a plurality of design parameters for a transport system. This transport system comprises at least one linear and/or planar motor and at least one mover. The method comprises the following steps:
a) providing a plurality of design variants for the transport system, wherein each design variant is specified by a set of values for the plurality of technical design parameters,
b) providing a model of the transport system, for which the plurality of technical design parameters serve as input parameters,
c) performing simulations for the plurality of design variants based on the model, whereby at least two objective performance values are obtained for each corresponding design variant,
d) presenting a set of simulated design variants in a graphical representation, in such a way that at least a sub-set of the simulated objective performance values is illustrated for the corresponding design variant,
e) selecting at least one design variant for a realization of the transport system based on the graphical representation.

Linear or planar motors are types of machines well known in the art. In contrast to rotating machines, they comprise one or more movers which perform a translational motion relative to the at least one stator when the motor is in action. In a linear motor, the stator can particularly assume the shape of a rail or rail segment and the mover(s) can be moved by linear force along this rail, along a straight and/or curved path. A common type of planar motor is also often referred to as a Sawyer motor. Here the stator can particularly assume the shape of a flat base element and the mover(s) can be moved within a plane on the surface of the stator. This can be a two-dimensional plane and in particular a two-dimensional cartesian plane, parallel to the plane given by the surface of the stator(s). However, in principle and in a more general sense, the planar motor can also effect a motion with respect to other degrees of freedom, such as levitation and/or rotation with respect to other axes. In any case, both motor types (linear and planar motors) allow a rather flexible control of the movement of the individual movers within the respective path and/or plane. There can in particular be more than one stator within the transport system and/or the stator can comprise several stator segments, such as rail segments of a linear motor or plate segments of a planar motor.

When the respective mover is configured to serve as a carrier for a transported element (such as a piece of material to be processed within a production facility), a transport system with high throughput, high flexibility and high positioning accuracy can be realized. The transport system can additionally comprise a controller for automatically controlling the movement of the at least one mover relative to the at least one stator. This controller can in particular be used to execute a movement plan for the respective mover(s) according to a predefined movement task. This task can particularly comprise starting positions and target positions of the individual mover(s), optional intermediate positions to be assumed that certain predetermined times, target velocities and/or a target throughput of material to be transported by the transport system. In other words, the movement task corresponds to the task of transporting the mover(s) by translational motion and fulfilling certain boundary conditions during this movement. One important target parameter for the design of such a transport system is usually the achievement of a high maximum throughput of transported material. Generally, the transport system can be a transport system for use in an industrial production facility.

In step a) of the method, a plurality of possible design variants is provided. These design variants can also be referred to as candidate design variants, from which at least one design variant is to be chosen for implementation in an actual transport system. The plurality of design variants can for example be provided by a manual input of a planner. Alternatively, they can be generated automatically and/or their generation can be assisted by a computer. Generally, design variants can be chosen which fulfill one of more predetermined boundary conditions of a given transport task and/or of a manufacturing line, into which the transport system is to be integrated. The choice of design variants which fulfill these boundary conditions can be assisted by a computer program, e.g. based on space limitations within a manufacturing site and on geometrical calculations.

In step b) of the method, a model of the transport system is provided, for which the plurality of technical design parameters serve as input parameters. This model can be a physical model of the transport system or it can be a more general model with at least one physical model component. For example, the model can comprise the description of physical properties as well as economic aspects of the transport system. The model can also be a data-based model or at least in part rely on pre-stored data. In this case, the data base can contain data which reflect the physical interrelations and/or the economic parameters of the relevant components.

In step c) of the method, simulations of a plurality of design variants are carried out based on the model provided in step b). The technical design parameters, which characterize each design variant, serve as input parameters to the model, and the model is used to obtain a plurality of objective performance values for each simulated design variant. The simulations can either be carried out for all the design variants provided in step a) or for a sub-set of those variants, depending on the required density of the parameter space. The "objective performance values" can comprise any result obtained from the simulation by which the transport system can be evaluated, such as material throughput, energy consumption or cost parameters. It is important that at least two such objective performance values are obtained for each design variant, so that the influence of the design parameters on multiple (and in particular conflicting) targets can be judged.

In step d) of the method, a graphical representation of the simulation results is given, which illustrates at least a sub-set of the simulated objective performance values in their dependence on one or more design parameters of the corresponding design variant. This allows a planner for the transport system to judge the impact of the design parameters on the illustrated performance values and in particular to judge the candidate design variants with respect to conflicting performance targets. The detailed implementation of the graphical illustration can assume various forms, but it is essential that the illustration shows the dependence of at least one objective performance value on the choice of at least one technical design parameter. This enables the planner to make an informed selection of a design variant for an actual implementation of the transport system in step e). The graphical illustration can either show data for all the design variants simulated in step c) or for a sub-set of those simulated design variants. Very generally speaking, the graphical representation tool can function as a multi-criteria decision support system.

The selection in step e) can involve choosing a favorable design variant. A favorable design variant can for example be a design variant for which an optimization of one objective performance values is achieved or (particularly favorably), for which a multi-objective optimization is achieved. In other words the favorable design variant can be a Pareto optimal solution, i.e. a solution that cannot be improved for one of the relevant objective performance values without degrading at least one other relevant objective performance value. More generally however, the term "favorable design variant" shall also comprise design variants which correspond to a simulated performance values which is close to an optimum and/or to a Pareto optimum. This can for example be advantageous if the planner has additional constraints or further objectives to consider which are not directly illustrated in the graphical representation shown in step d). It is however an essential feature of the invention, that the graphical representation assists in selecting a favorable design variant by allowing an overview of the impact of the technical design parameters on one or more objective performance values.

Generally, the order of carrying out the method steps can deviate from the order in which they are described. It is of course expedient that step b) is carried out before step c) so that the simulations can use the provided model. In one variant, all design variants can be provided as a complete set before carrying out the simulations, but it is also possible that the simulations are for example carried out for a sub-set and that then further design variants are provided in one or more further passes through step a) and that further simulations on these additional variants are then carried out. The plurality of simulations in step c) can generally be carried out sequentially and/or in parallel. Step d) is favorably carried out after at least a part of the simulations of step c) is finalized. Furthermore it is generally expedient that step e) is carried out after steps a) to d), so that the decision can be based on the graphical representation of the simulation results.

An important advantage of the method according to the present invention is therefore, that a planner is assisted in making a favorable design selection for a transport system by the combination of performance simulations on a multitude of design variants and a comparative graphical illustration of the obtained dependence of the objective performance values (i.e. the solution space) on the technical design parameters (i.e. the input space). In contrast to the iterative simulation approach applied previously, a relatively large set of design variants can be generated and simulated and the corresponding results can be compared simultaneously in the graphical illustration. Favorably, the actual selection within step e) is made by a human being. In other words, the selection is not made automatically by computer, but it is instead made by a user which is assisted by the graphical representation of the simulation results generated in step d). In this fashion, the human user has the freedom to make a judgment with respect to the relative importance of conflicting objectives and/or to allow a consideration of further constraints and/or objectives which are not directly considered in the simulation or illustrated in the graphical representation. However, compared to the conventional approach, the selection becomes less arbitrary because it is guided by the simulated performance values. Because of this guidance, the selection also becomes more transparent and the reasons for a specific choice can more easily be communicated to potential customers, sales personnel and/or other members of a planning team for a production facility. Such a planning team can comprise members from several engineering domains and/or the sales domain, and the described visualization of the basis for the selection can enhance the communication between the various team members and even facilitate a selection that is made jointly by several team members from different domains.

Besides the above method, the invention refers to a computer program product with program code, which is stored in machine-readable form on a medium, for carrying out a method according to the invention or one or more preferred embodiments of the invention when the program code is executed on a computer. In particular, all the steps a) through e) can either be fully carried out on a computer or at least be assisted by a computer. Step a) can comprise a user input to the program for specifying the design variants, but otherwise the design variants can be provided in a computer environment. The model provided in step b) is implemented within the computer program, and the simulations of step c) are also carried out with the computer. The graphical visualization of step d) is also performed with a computer, in particular by a so-called graphical user interface (GUI). The selection within step e) (i.e. the actual design decision) is favorably performed by a human user, as described above, but it is assisted by the computer program because it is based on the above-mentioned graphical representation of the computer-implemented simulations. The advantages of the computer program product generally correspond to the advantages described above for the method according to the invention.

Advantageous configurations and embodiments of the method according to the invention follow from the claims dependent on claim 1 as well as the following description. The advantageous features of the method and the computer program product can generally be interchanged and combined.

According to a generally preferred embodiment, the transport system can comprise one or more movers, wherein each mover functions as a carrier for a transported element and/or a transported material. In other words, the transported elements are moved "piggy-back" on the respective movers. If a plurality of such movers are used, the transport system is a so-called "Multi-Carrier-System". Such a Multi-Carrier-System allows a very flexible and well defined movement of individual transported elements, especially within a modern industrial manufacturing line. However, it is not necessary that the movers are configured as carriers. Instead the movers themselves can also form the elements to be transported by the transport system.

The transport system can generally comprise a plurality of linear and/or planar motors. In other words, it comprises not just a plurality of movers but also a plurality of stators or stator segments. For example, a linear motor can comprise a linear (straight and/or curved) rail which is composed of several neighboring curvilinear rail segments, wherein each rail segment electrically functions as a stator of a separate linear motor. In combination, the plurality of such stators can effect a precise and controlled movement of a plurality of movers along the transport direction which is determined by the shape of the rail. In this setup, each of the movers can form an individual linear motor with each of the stator segments when the respective mover is located closely enough for an electromagnetic interaction. In a similar fashion, a corresponding plurality of planar motors can be formed by a plurality of tiled, flat stator segments (stator plates), which together form a two-dimensional movement plane for the corresponding movers.

According to a preferred implementation of the motor(s), the stator of the respective linear and/or planar motor comprises a rail segment (for the linear motor) or plate segment (for the planar motor) with a plurality of electromagnetic coils. The at least one mover can comprise at least one permanent magnet per mover. In other words, the stator serves as the primary part and the mover serves as the secondary part of each linear or planar motor. This electromagnetic configuration is particularly advantageous because the stator winding(s) can easily be energized by corresponding electrical circuits within the stationary rail or plate. In contrast, the configuration of the movers can be relatively simple because the permanent magnets do not need to be connected to any power supply. In principle however, it is also possible to choose the opposite configuration such that the mover serves as the primary part and the stator serves as the secondary part of the respective motor.

Optionally, the transport system can comprise one or more transport belts for enabling an additional movement of the carrier(s). This transport belt can for example be a toothed belt to which the carrier(s) can be attached. In particular, the transport belt can be a return belt which allows a transport from an end section of the transport system back to a start section of the transport system, thereby forming an overall loop in which the carriers are circulated.

According to a preferred embodiment for the design variants, the plurality of design parameters can comprise at least one geometrical design parameter, e.g. a geometrical dimension and/or a number of sub-elements comprised in the transport system. In particular, the geometrical design parameter can be at least one of:
- a number of rail or plate segments comprised in the transport system and in particular in the at least one motor,
- one or more geometrical dimensions of the rail or plate segment(s) comprised in the transport system and in particular in the at least one motor,
- a number of movers comprised in the transport system and in particular in the at least one motor,
- one or more geometrical dimensions of the mover(s) comprised in the transport system and in particular in the at least one motor,
- a number of additional belts comprised in the transport system,
- one or more geometrical dimensions of the belt(s) comprised in the transport system.

There are usually geometrical constraints to be fulfilled by the targeted transport system, such as a pre-determined transport path to be covered by the transported elements. However, there are often several ways to meet the given geometrical constraints and the considered design variants can differ by the detailed geometrical implementation by which the geometrical constraints are met, such as the number and dimensions of the individual components. For example, a fine segmentation of the motor into various stator segments can be compared to a relatively coarse segmentation which covers the same transport path. The specific segmentation can have a large impact on the achievable throughput, but also on energy consumption, investment cost and operational cost.

Additionally or alternatively, the plurality of design parameters can comprise at least one electromagnetic design parameter, in other words a parameter which is related to the electromagnetic operation of the motor. In particular, the electromagnetic design parameter can be at least one of:
- a number and/or magnetic properties of permanent magnets comprised in the at least one mover or in the stator,
- a number and/or type of electromagnetic windings comprised in the stator or in the at least one mover,
- a performance classification of the motor(s),
- a performance classification of the belt(s) comprised in the transport system.

These electromagnetic design parameters can have a large impact on the transport speed and therefore on the achievable throughput, but also on energy consumption and heat dissipation, as well as cost values and reliability values.

According to a generally preferred embodiment for the choice of the design variants, the plurality of technical design parameters can form a regular grid in a parameter space with at least two dimensions or a sub-set of such a regular grid. However, the dimensionality of the considered parameter space can also be higher, for example with a number of dimensions between 3 and 20, in order to assess the influence of many parameters on the system performance and in order to select a favorable parameter set from this large parameter space. In this way, a more favorable compromise between several conflicting performance targets can usually be achieved. In this context, the term "regular grid" is understood in the mathematical sense (a tessellation of n-dimensional Euclidean space by congruent parallelotopes). Particularly favorably, such a parameter grid can be generated automatically by a computer, based on a user input for an interval to be covered for each parameter and the corresponding step size. The grid can be incomplete and/or have gaps, in particular when certain grid positions are excluded from the feasible design space due to system constraints. Generally, an automatically generated parameter space can serve to make the overall selection process faster compared to the conventional methods with a manual and iterative parameter selection. The speed of the overall process can be improved even further when the simulations on the various design variants are at least in part carried out in parallel. Generally, and independently of whether the parameter sets form a grid or not, the physical simulations of step c) can favorably be performed for at least 20 design variants and particularly favorably for at least 100 design variants. The simulations can in particular be executed automatically for this plurality of design variants, and their large number allows for a particularly effective optimization of the design in view of the relevant performance targets.

According to a generally preferred embodiment for steps c) and d), the simulated objective performance values can comprise at least one physical property. In particular, they can comprise at least one of:
- a maximum throughput of transported elements that can be achieved by the transport system,
- a total amount of energy consumed by the transport system during operation,
- an amount of energy consumed and/or heat dissipated in one or more individual segments of the motor,
- an amount of energy consumed and/or heat dissipated in one or more belts of the transport system,
- a predicted frequency of error states of the transport system,
- a predicted throughput in case of a carrier failure and/or other partial failure state.

These are examples of physical properties which usually are to be considered in the design of such a transport system. The general goal is to maximize the throughput values and at the same time to minimize the values for energy consumption, heat dissipation and/or frequency of error states. These are often conflicting design goals in the sense that these performance values cannot usually be optimized by the same parameter set. In order to obtain reliable values for these physical properties, it is particularly favorable that the model provided in step b) comprises a physical model component (one that models the laws of physics in the transport system) and/or uses a data base, in which the comprised data reflect the physical interrelations.

Additionally or alternatively, the simulated objective performance values can comprise at least one economic property. In particular, they can comprise at least one of:
- an expected total investment cost for the corresponding transport system,
- an expected operating cost per operating time for the corresponding transport system,
- an expected maintenance cost per operating time for the corresponding transport system.

Particularly advantageously, at least one economic property is simulated in addition to at least one physical property. In order to achieve this, a data base can be accessed during step c), the data base containing economic parameters such as contributions of individual components to the investment cost, contributions to the expected labor cost for assembling and operating the system as a function of specific design parameters, contributions to expected maintenance costs, etc. Optionally, the determination of an economic performance value can involve a combination of physical modelling and looking up corresponding cost data, for example when a failure probability is first determined as a function of motor use state from a physical model, and then the expected repair cost for the predicted failure is determined by looking up the cost for the necessary spare part(s) and replacement labor.

According to a generally preferred embodiment for step d), each design variant can be represented by a marker in a coordinate system with at least two dimensions. At least one of these dimensions can favorably correspond to an objective performance value. It is also possible that two or more of the illustrated dimensions correspond to objective performance values. In other words, a multi-dimensional results space can be illustrated as a basis for making the selection in step e). In general, by representing each design variant by a marker, a point cloud can be obtained which visualizes the dependence of at least one objective performance parameter on at least one technical design parameter and/or which visualizes the trade-offs in achieving the targets for several (potentially conflicting) objective performance values.

The coordinates which correspond to the illustrated dimensions can for example be position coordinates (e.g. in a cartesian coordinate system) and/or color coordinates. Alternatively or additionally, different marker types can also be used to reflect variations in a further dimension. This way, the dependencies with respect to two, three, four or even more dimensions can be visualized, thus aiding the selection of a favorable design parameter set.

According to a generally favorable variant, the graphical representation of step d) allows the illustration of at least two objective performance values for each depicted design variant, in particular such that each of the two objective performance values forms a separate scale in a coordinate system with at least two dimensions. In other words, the trade-off between at least two objective performance values can be illustrated in the graph. These can in particular correspond to conflicting performance targets. The effect of such a graphical representation is that a so-called Pareto frontier is easily identified. A Pareto frontier (also called Pareto front or Pareto set) is a set of Pareto optimal solutions, as explained above. This type of illustration can therefore aid a human user to select a design variant which is for example part of the Pareto frontier or at least close to it.

Generally, and independently of which quantities correspond to the different dimensions used in the illustration, a design variant can be selected which is part of a Pareto frontier contained in the graphical representation of step d). As mentioned above, this is particularly easy to achieve if at least two of the graphical dimensions correspond to conflicting performance targets. Alternatively however, it is also possible that only one of the graphical dimensions correspond to a performance target and another graphical dimension corresponds to a technical design parameter. This can be particularly favorable if the illustrated technical design parameter is known to generally correlate with a performance target that conflicts with the illustrated performance target. For example, the depicted design parameter can be a number of stator segments. If the total investment cost is expected to correlate with the degree of segmentation, a Pareto frontier can be identified in a graph which contains a physical performance value (such as material throughput or energy efficiency) on one scale and the degree of segmentation on another scale.

More generally speaking, the graphical representation of step d) can allow the illustration of at least one technical design parameter for each depicted design variant, in particular such that this technical design parameter forms a separate scale in a coordinate system with at least two dimensions. This design parameter scale can be in addition to one or more scales which correspond to objective performance values. In such a graph, which has at least one scale for a technical design parameter, it is particularly easy to visualize the direct influence of this design parameter on one or more relevant objective performance values (i.e. the ones that correspond to the other scales). As there are often more relevant dimensions than can be viewed in a clear graphical arrangement, it is also possible to show more relevant parameter values on demand. For example, a pop-up window with further information can be displayed if a user selects a marker for a specific, or the corresponding parameters for other dimensions can be displayed on additional linear graphs for the selected design variant. All this helps a human user to gain insight into the parameter dependencies and to make an informed selection.

According to another generally favorable embodiment for the graphical representation, step d) can comprise a switching of the parameter represented by at least one coordinate scale by a user interaction. In other words, the user can for example select whether two or more objective performance values are to be used as coordinate scales of if one of those objective performance values is to be (e.g. temporarily) replaced by a relevant technical design parameter. By such a manual switching of the coordinate scales, an even better insight and overview of the dependencies within the multi-dimensional parameter space can be gained.

Additionally or alternatively, step d) can comprise an adaptation of the range of at least one coordinate scale by a user interaction. The range to be adapted can either correspond to a scale of a multi-dimensional illustration, or it can correspond to a separate linear scale which determines which sub-set of all the simulated design variants is to be shown in the graphical representation. The later variant can for example allow a fading or greying or masking of parts of the solution set if the human user decides that a certain sub-set of the solutions is less relevant. In this fashion, a better overview of the relevant parts of the solution space can be gained.

According to a further favorable embodiment, step c) can comprise performing a plurality of different simulations per design variant. In particular, the individual simulations for one design variant can differ by at least one operational parameter of the transport system. For example, different objective performance values can be obtained when different manufacturing processes are applied to a material transported by the transporting system. A different manufacturing process typically leads to a different transportation task, and for example the trade-offs between throughput and energy efficiency can be judged very differently depending on the relevant task. If the performance for two different operational settings is to be compared, the different operational settings can for example be visualized by different markers, different colors and/or an offset position within the same graph.

According to another example, the operational parameters can differ in a set of simulations if a ramp-up phase of a manufacturing line is to be compared with a regular operating phase.

According to another example, a regular operating phase can be compared to an operation in an emergency mode or in a mode with reduced availability of the transport system. Such a reduced availability can for example arise in a multi-carrier system when one or more carriers are dysfunctional, but operation is maintained with the residual carriers. In all those cases, a comparison of different operational scenarios in the simulation can be helpful to assist a selection between various candidate design variants. The residual throughput that can be achieved in a temporary situation with a reduced number of carriers can be an important design goal for such a transport system.

Further advantages and details of the invention may be found in the exemplary embodiments described below and in the drawings, in which:
Figure 1 shows a schematic perspective view of a linear motor for a transport system,
Figure 2 shows a schematic sectional view of part of such a transport system,
Figure 3 shows a similar transport system with an additional return belt,
Figure 4 shows a flow diagram illustrating several steps of the selection method and
Figure 5 shows an example of a graphical representation of a multi-dimensional parameter space.

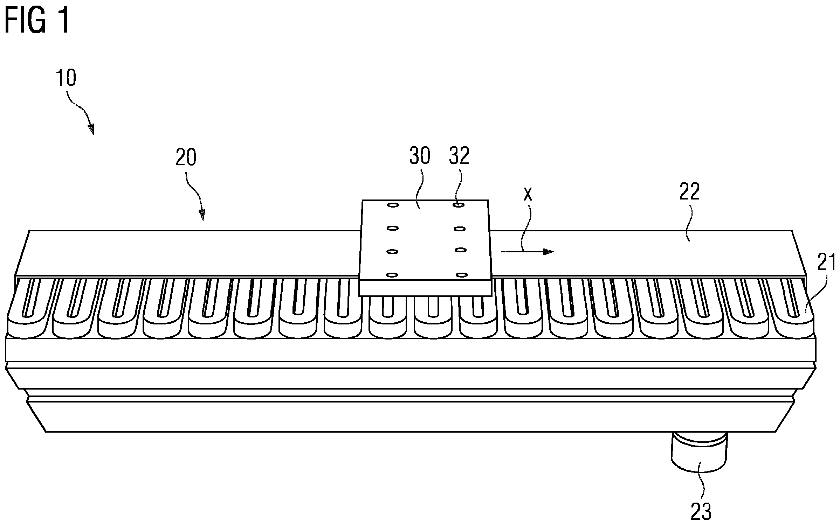

Figure 1 shows a partial perspective view of a linear motor 10 which is part of a transport system for which the technical design parameters are to be selected according to the present invention. This linear motor 10 comprises a stator 20 and at least one mover 30 which can be moved relative to the stator 20 along a transport direction x. The stator 20 has the longitudinal shape of a rail and is the stationary part of the motor 10. The depicted stator 20 can be a part of an extended rail system with several such segments on both sides of the stator 20 of figure 1. The overall rail system can comprise straight and/or curved rail segments such that the movement along the overall transport direction x corresponds to curvilinear movement.

The stator 20 of figure 1 comprises a stator housing 22 and at least one connector 23 for the motor power and/or power cable. Within the stator housing 22, the stator 20 comprises a plurality of electromagnetic windings 21 which form the stator windings of the linear motor 10. The depicted mover 30 comprises one or more permanent magnets (not shown here) which interact with the electromagnetic field of the stator windings when the linear motor 10 is in operation and the stator windings are energized. The mover 30 is then moved along the rail by electromagnetic forces. In particular, the mover 30 can serve as a carrier for one or more transport elements to be transported by the overall transport system. In the example of figure 1, the mover 30 comprises a plurality of mounting holes 32 which can be used for mounting a holder for the transported element(s) on top of the carrier. The linear motor 10 can also comprise a plurality of such movers 30.

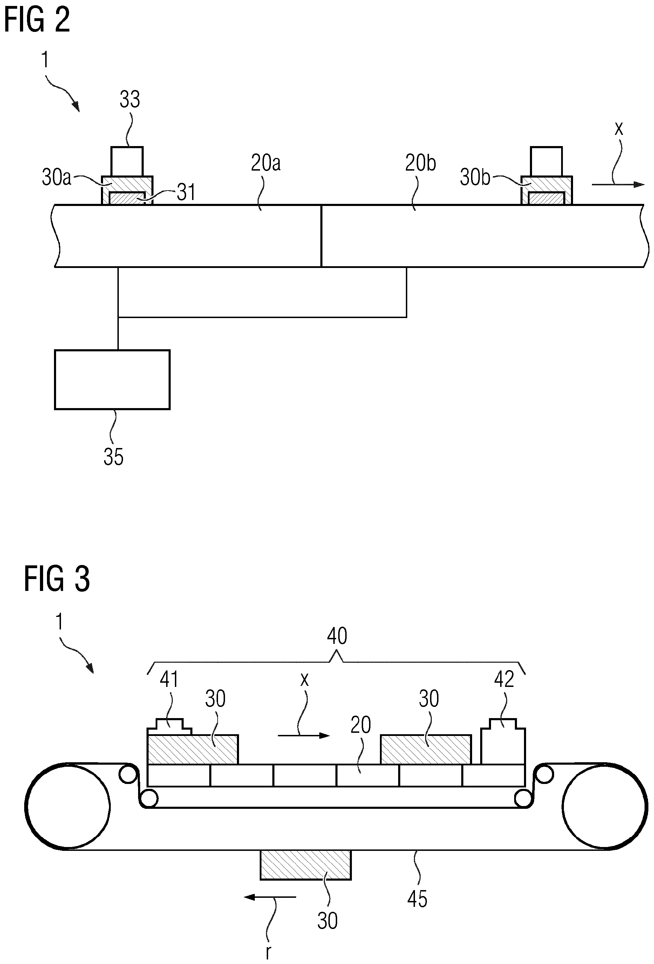

Figure 2 shows a schematic sectional view of a larger part of a similar overall transport system 1 which comprises several such linear motors 10, two of which are shown exemplarily in this figure. Each motor comprises a stator, denoted as 20a and 20b, each of which forms a rail segment of an overall curvilinear rail system. The stator windings in each stator 20a, 20b are not shown here for the sake of simplicity. Two exemplary movers 30a and 30b are depicted which can each be moved along the overall transport direction x. However, there is no fixed assignment between the individual movers 30a, 30b and the individual stators 20a, 20b. Instead, a large number of such movers can be moved along the overall rail system and each mover forms a linear motor together with the stator on which is currently moving. Each mover carries one or more permanent magnets 31, preferably with a magnetic dipole orientation perpendicular to the surface of the rail. These magnets can for example be magnetic plates integrated at the bottom of each mover. The movers may advantageously be configured such that the type and/or number of magnets can be adjusted depending on operational settings, for example depending on the weight of transported elements 33. In this example, the movers 30a, 30b serve as carriers of a Multi-Carrier-System and correspondingly each mover 30a, 30b carries a transported element 33. These transported elements 33 can for example be work pieces to be processed in an industrial manufacturing line. Alternatively or additionally to the depicted linear motors, the transport system 1 can in principle also comprise one or more planar motors which allow a corresponding motion of the movers along two dimensions within a transport plane. It is also possible that the transport system comprises one or more conventional transport belts or other additional transport segments, either at one end or at both ends of the rail formed by the linear motors. The transport system 1 can also comprise a controller 35 by which the movement of the individual movers 30a, 30b in the transport system 1 can automatically be controlled.

Figure 3 shows a schematic sectional view of an even larger part of a similar overall transport system 1 which comprises several stator segments 20 and several movers 30 (the size of the movers 30 is exaggerated in this figure). Together, they also form linear motors by which the movers 30 can be moved along the overall transport direction x. The core section of the transport system 1 which is covered by the rail segments of the stators 30 is called a Multi-Carrier System 40. In addition to this Multi-Carrier System 40, the transport system 1 also comprises a return belt 45 which serves to transport the movers 30 in a return direction r which is opposite to the overall transport direction x of the multi-carrier system 40. The return belt 45 can be designed as a toothed belt and the carriers 30 can be attached to this toothed belt in a way that they can be held up-side down and therefore be transported back to a starting section underneath the Multi-Carrier System 40. The Multi-Carrier System 40 comprises an optional check-in station 41 at which the carriers 30 can be passed from the return belt 45 to the rail system formed by the stators 20. However, in other implementations, the passing of carriers to the rail system can also be handled without a separate check-in station. Similarly, it comprises an optional check-out station 42 at its opposite end, where the carriers can be passed from the rail system to the return belt. Typically, various process steps of an industrial manufacturing process can be applied to the elements 33 that are being transported by the carriers while they are moved withing the central multi-carrier system 40. The return belt 45 mainly serves to move the carriers 30 back to the starting position when the processed elements (which have passed the manufacturing line) are removed from these carriers 30.

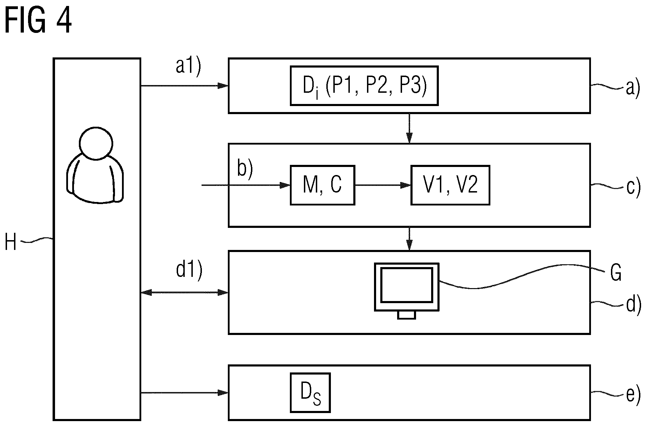

Figure 4 shows a schematic flow diagram illustrating some aspects of the method for selecting a plurality of technical design parameters P1, P2, P3 for such a transport system 1. In the right-hand side of the figure, the steps a) to e) of the method are illustrated schematically. All these steps a) to e) are performed on a computer or at least with the assistance of a computer. On the left hand side of the figure, the interactions of a human user H within this process are indicated. This human user H is typically a design planner or engineer or user of the transport system. There can also be multiple users from a team, which interact with the automated parts of the process in a corresponding way.

Within step a) of the method, a plurality of design variants Dᵢ for the transport system is provided. Each of these design variants Dᵢ is specified by a set of values for a plurality of technical design parameters P1, P2, P3. This step a) can comprise a sub-step a1), where a manual input by the user H is given. For example, the whole parameter field defining the various design variants Dᵢ can be supplied manually by the user H. Alternatively, the user H can specify which technical design parameters P1, P2, P3 are to be varied and further specify upper and lower limits and an interval for each parameter, so that a regular grid can automatically be generated by the computer. In this example, three technical design parameters P1, P2, P3 are shown. The dimensionality of the parameter field can also be larger or smaller, but there should be at least two parameters P1, P2 to be varied in order to allow a selection of a design variant from a sufficiently large parameter space.

The relevant technical design parameters P1, P2, P3 can be chosen from many relevant properties. In particular, they can comprise geometrical and/or electromagnetic properties of the components of the transport system. To give just one example, three technical design parameters can be varied in a regular grid, where P1 is the number of movers 30 (carriers) in the transport system, P2 is the number of stator segments 20 present in the Multi-Carrier System 40 and P3 is a geometrical parameter of the configuration of the return belt 45. Other relevant parameters may be adjusted, so that the overall constraints for the transport system are met for each design variant. Generally, the number of design variants Dᵢ can be rather high. For example, if a regular grid is constructed where P1 is varied between 6 different values, P2 is varied between 3 different values and P3 is varied between 8 different values, the number of design variants Dᵢ in the grid is 144. Alternatively or in addition to such geometrical design parameters, the variation can also comprise electromagnetic parameters of the components, such as the mover(s), stator(s) and return belt(s).

Within step b) of the method, a model M of the transport system is provided. This model can be a physical model or at least comprise a model component which describes the physical interrelations within the transport system. In addition to this physical model M, a data base with cost data C can optionally be provided such as cost values for the available components, expected labor cost and other economic data. Both the model M and the data base with the cost data C can be provided within the computer.

Within step c) of the method, simulations are performed on a plurality of the design variants Dᵢ proposed in step a). These simulations are based on the model M, and the economic cost data C can also optionally be used. From the simulations, at least two objective performance values V1, V2 are obtained for each of the considered design variants Dᵢ. These can be physical performance values (such as an achievable material throughput or an energy consumption) and/or economic performance values (such as expected investment cost, operating cost or maintenance cost). In any case, at least two performance values are obtained as a result of the simulation, so that a multi-criteria assessment of the plurality of the design variants Dᵢ can take place during the selection process.

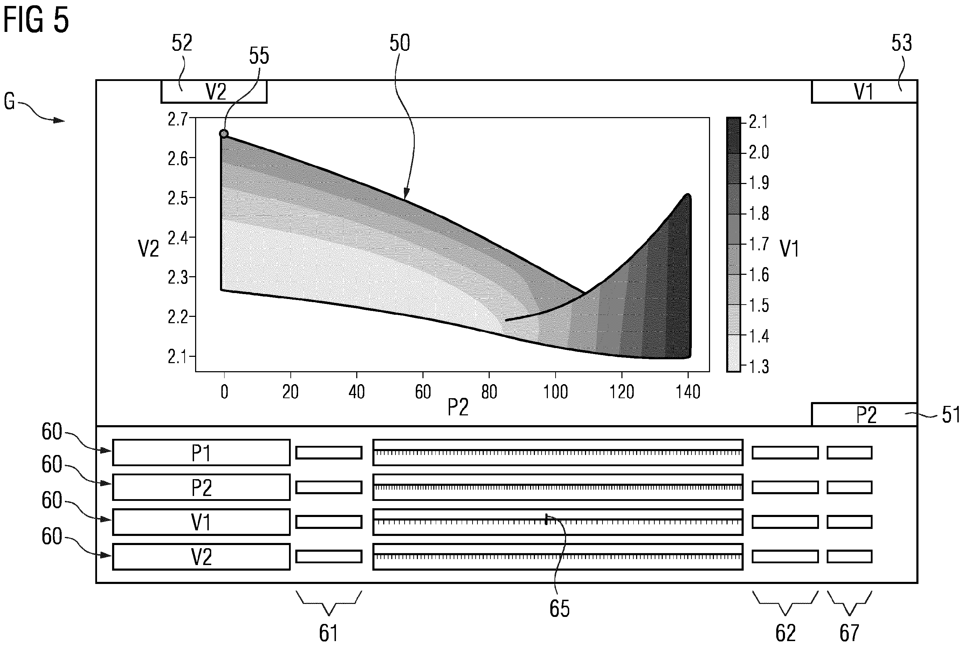

Within step d) of the method, the results of the simulations are presented graphically. More details of the corresponding graphical representation G will be given with reference to Figure 5 below. In a sub-step d1), the user H views the graphical representation G and assesses the influence of the variation of technical design parameters P1, P2, P3 on the objective performance values V1, V2. Based on this graphical overview of the relevant influence parameters, the user selects at least one specific design variant Dₛ, which is to be implemented in an actual transport system.

Figure 5 shows an example of a graphical representation G of the relevant multi-dimensional parameter space in schematic form. The upper part of the graph G contains a multi-dimensional plot of the properties associated with the plurality of simulated design variants Dᵢ (or at least a sub-set thereof). In this example, the exact nature and values of the individual parameters shall not be relevant. The example only serves to show how the dependencies between several technical design parameters P1, P2 and several objective performance values V1, V2 can be visualized for a large data set. The multi-dimensional plot in the upper part of Figure 5 is a plot within a two-dimensional cartesian coordinate system, which uses the grey-scale (or in other implementations: color information) as an additional scale. Each design variant Di is represented by a separate marker 50, though in this example the markers 50 are close enough to form a dense cloud. In the exemplary setting of the GUI, the plot shows the values for the second technical design parameter P2 on the abscissa, the values for the second objective performance values V2 on the ordinate and the values for the first objective performance value V1 on the color scale. However, the assignment of these scales is not fixed, but rather it can be modified by the user H. Correspondingly, the GUI contains an abscissa selection menu 51, an ordinate selection menu 52 and a color/grey-scale axis selection menu 53. These three selection menus can for example be implemented as drop-down menus, which allow a selection of the other relevant parameters P1, P2, ... or V1, V2, ... for each of the scales.

Generally, it is also possible that the multi-dimensional plot only shows two parameter dimensions or an even higher number of parameter dimensions, e.g. by using a three-dimensional position coordinate system in addition to a color scale and/or different marker types. It is only important that at least two parameter dimensions are visualized so that correlations can be assessed by the user H. At least one of the visualized parameters shall be one of the objective performance values V1, V2, ... as obtained from the simulation. The other parameter can be a second objective performance value or it can be a technical design parameter P1, P2, ... In the latter case, the illustrated technical design parameter can be correlated to a second objective performance value. In this fashion, the user H is enabled to make a selection based on a multi-criteria assessment of the parameter space. In the example of figure 5, the target for the objective performance value V2 could be to achieve low values. The technical design parameter P2 could be directly correlated to investment cost, where the target is also to achieve low values. In this case, the corresponding Pareto frontier with respect to these two parameters would be the line limiting the point cloud on the lower, left-hand side of the multi-dimensional graph.

In addition to the multi-dimensional plot, the graphical representation G of Figure 5 also contains a plurality of one-dimensional scale viewers 60 and corresponding menus and data fields. In this example, there are four such one-dimensional scales corresponding to the first two technical design parameters P1, P2 and the first two objective performance values V1, V2. For each one-dimensional scale, there is a data field for the lower limit 61 and a data field for the upper limit 62 of the scale. By changing these values, the user H can adjust the limits of the relevant parameters in the plot and thereby select a sub-set of the design variants to be shown. The design variants that correspond to values outside the selected limits can either be suppressed completely or shown by much smaller or lighter-shade markers, so that only the set within the limits is highlighted in the plot. When a marker for a specific design variant Dᵢ is selected in the plot, for example the data point 55, the data fields 67 show the corresponding values for each of the four one-dimensional scales. In this fashion, the user can explore the values of further parameters, which are not represented by an axis in the current settings of the multi-dimensional plot. Also, the position of the parameter values can optionally be highlighted by a marker 65 on the corresponding one-dimensional scale.

All the graphical features are examples of how the user H can be assisted by visualizing the plurality of simulation results as a basis for the selection step e). In particular, the multi-dimensional graphical representation can help the user H to identify Pareto-optimal solutions, because the Pareto frontiers - for which two or more selected parameters in a trade-off situation - are easily visualized in such a plot. As a consequence, the user H can select a design variant Dₛ which for examples lies on such a Pareto frontier or is at least close to it. In this sense, the graphical representation can serve as a multi-criteria decision support tool. This makes the design selection of step e) much more transparent and easier communicate to other member of the planning team and/or to potential customers. In addition to the visualized data, additional information can be exported for the respective design variants Dᵢ, such as values for further parameters not contained in the plot, CAD (computer-aided design) drawings or bills of materials.

The computer-assisted execution of the inventive method can also favorable be offered as a web service, where the interactions with the user H can take place via a web-based user interface. This can for example be offered as a cloud service, so that the simulations of step c) can be run in parallel on several cloud computers. This can be typically much faster than running all the simulation steps on a local computer close to the user H.

It is to be noted that independent of the grammatical term usage within the above description, individuals with male, female or other gender identities are included within the term.

### Reference Numerals

- 1: transport system
- 10: linear motor
- 20: stator
- 20a: stator (first rail segment)
- 20b: stator (second rail segment)
- 21: stator winding
- 22: stator housing
- 23: pedestal
- 30: mover (carrier)
- 30a: mover (first carrier)
- 30b: mover (second carrier)
- 31: permanent magnet
- 32: mounting hole
- 33: transported element
- 35: controller
- 40: multi-carrier system
- 41: check-in station
- 42: check-out station
- 45: return belt
- 50: markers (point cloud)
- 51: abscissa selection menu
- 52: ordinate selection menu
- 53: color/grey-scale axis selection menu
- 55: selected data point
- 60: scale viewers and menus
- 61: data fields for lower limits
- 62: data fields for upper limits
- 65: marker for selected data point
- 67: data fields for selected data point
- a): providing design variants
- a1): user input
- b): providing a model
- c): performing simulations
- d): presenting simulation results
- d1): viewing graphical representation
- e): selecting design variant
- r: return direction
- x: transport direction
- Dᵢ: design variants
- Dₛ: selected design variant
- C: cost data
- G: graphical representation
- H: human user (design planner)
- M: model
- P1-P3: technical design parameters
- V1,V2: objective performance values

## Claims

1. A method for selecting a plurality of technical design parameters (P1, P2, P3) for a transport system (1),
the transport system (1) comprising at least one linear and/or planar motor (10) with a stator (20) and at least one mover (30),
wherein the method comprises the following steps:
f) providing a plurality of design variants (Dᵢ) for the transport system (1), wherein each design variant (Dᵢ) is specified by a set of values for the plurality of technical design parameters (P1, P2, P3),
g) providing a model (M) of the transport system (1), for which the plurality of technical design parameters (P1, P2, P3) serve as input parameters,
h) performing simulations for a plurality of design variants (Dᵢ) as specified by the respective set of values for the plurality of technical design parameters (P1, P2, P3) based on the model (M), whereby at least two objective performance values (V1, V2) are obtained for the corresponding design variant (Dᵢ),
i) presenting a set of simulated design variants (Dᵢ) in a graphical representation (G), in such a way that at least a sub-set of the simulated objective performance values (V1, V2) is illustrated for the corresponding design variant (Dᵢ),
j) selecting at least one design variant (Dₛ) for a realization of the transport system (1) based on the graphical representation (G).

2. The method according to claim 1, wherein the transport system (1) comprises one or more movers (30), wherein each mover (30) functions as a carrier for a transported element (33), and optionally a belt (45) for enabling an additional movement of the carrier(s).

3. The method according to one of the preceding claims, wherein the plurality of technical design parameters (P1, P2, P3) comprises at least one geometrical design parameter,
in particular at least one of:
- a number of rail or plate segments (20a, 20b) comprised in the transport system (1),
- geometrical dimensions of rail or plate segments (20a, 20b) comprised in the transport system (1),
- a number of movers (30) comprised in the transport system (1),
- geometrical dimensions of the movers (30) comprised in the transport system (1),
- a number of belts (45) comprised in the transport system (1),
- geometrical dimensions of belts (45) comprised in the transport system (1).

4. The method according to one of the preceding claims, wherein the plurality of technical design parameters (P1, P2, P3) comprises at least one electromagnetic design parameter, in particular at least one of:
- a number and magnetic properties of permanent magnets (31) comprised in the at least one mover (30) or in the stator (20),
- a number and type of electromagnetic windings (21) comprised in the stator (20) or in the at least one mover (30),
- a performance classification of the motor (10),
- a performance classification of a belt (45) comprised in the transport system (1).

5. The method according to one of the preceding claims, wherein the plurality of technical design parameters (P1, P2, P3) form a regular grid or a sub-set of a regular grid in a parameter space with at least two dimensions.

6. The method according to one of the preceding claims, wherein the simulated objective performance values (V1, V2) comprise at least one physical property,
in particular at least one of:
- a maximum throughput of transported elements (33) that can be achieved by the transport system (1),
- a total amount of energy consumed by the transport system (1) during operation,
- an amount of energy consumed and/or heat dissipated in one or more individual segments (20a, 20b) of the motor,
- an amount of energy consumed and/or heat dissipated in one or more belts (45) of the transport system (1),
- a predicted frequency of error states of the transport system (1),
- a predicted throughput in case of a carrier failure and/or other partial failure state.

7. The method according to one of the preceding claims, wherein the simulated objective performance values (V1, V2) comprise at least one economic property,
in particular at least one of:
- a total investment cost for the corresponding transport system (1),
- an expected operating cost per operating time for the corresponding transport system (1),
- an expected maintenance cost per operating time for the corresponding transport system (1).

8. The method according to one of the preceding claims, wherein in step d) each design variant (Dᵢ) is represented by a marker (50) in a coordinate system with at least two dimensions.

9. The method according to one of the preceding claims, wherein the graphical representation (G) of step d) allows the illustration of at least two objective performance values (V1, V2) for each depicted design variant (Dᵢ), in particular such that each of the two objective performance values (V1, V2) forms a separate scale in a coordinate system with at least two dimensions.

10. The method according to one of the preceding claims, wherein in step e) a design variant (Dᵢ) is selected which is part of a Pareto frontier contained in the graphical representation (G) of step d).

11. The method according to one of the preceding claims, wherein the graphical representation (G) of step d) allows the illustration of at least one technical design parameter (P1, P2, P3) for each depicted design variant (Dᵢ), in particular such that this technical design parameter (P1, P2, P3) forms a separate scale in a coordinate system with at least two dimensions.

12. The method according to one of the preceding claims, wherein step d) comprises a switching of the parameter (V1, V2, P1, P2) represented by at least one coordinate scale and/or an adaptation of the range of at least one coordinate scale by a user interaction.

13. The method according to one of the preceding claims, wherein step c) comprises performing a plurality of different simulations per design variant (Dᵢ), in particular where the individual simulations differ by at least one operational parameter of the transport system.

14. A computer program product with program code, which is stored in machine-readable form on a medium, for carrying out a method according to one of the preceding claims when the program code is executed on a computer.
